# EUROPÄISCHE PATENTANMELDUNG

(11) **EP 3 142 229 A1**
(43) Veröffentlichungstag der Anmeldung: **15.03.2017**
(21) Anmeldenummer: 15184229.1
(22) Anmeldetag: 08.09.2015
(51) Int. Cl.: H02K 3/22, H02K 3/24

(54) **HOHLLEITER FÜR EINE ELEKTRISCHE MASCHINE, ELEKTRISCHE MASCHINE SOWIE HERSTELLUNGSVERFAHREN**

(71) Anmelder: Siemens Aktiengesellschaft, 80333 München (DE)
(72) Erfinder: Dorfner, Matthias, 84375 Kirchdorf am Inn (DE); Jajtic, Zeljko, Dr., 80992 München (DE)

(57) **Zusammenfassung**

Die Erfindung betrifft einen Hohlleiter (1) für eine elektrische Maschine (2) mit einer Leitereinrichtung (3), welche aus einem elektrisch leitfähigen Material gebildet ist, und mit einem Kühlkanal (4), welcher zum Kühlen der Leitereinrichtung (3) mit einem Kühlmedium (5) durchströmbar ist, wobei die Leitereinrichtung (3) den Kühlkanal (4) zumindest bereichsweise umgibt, wobei die Leitereinrichtung (3) eine Mehrzahl von Einzelleitern (7) umfasst, welche entlang einer Umfangsrichtung (U) des Kühlkanals (4) gleichmäßig beabstandet zueinander angeordnet sind, und der Hohlleiter (1) eine Trägereinrichtung (8) umfasst, an oder in welcher die Einzelleiter (7) gehalten sind.

## Beschreibung

Die vorliegende Erfindung betrifft einen Hohlleiter für eine elektrische Maschine mit einer Leitereinrichtung, welche aus einem elektrisch leitfähigen Material gebildet ist, und mit einem Kühlkanal, welcher zum Kühlen der Leitereinrichtung mit einem Kühlmedium durchströmbar ist, wobei die Leitereinrichtung den Kühlkanal zumindest bereichsweise umgibt. Darüber hinaus betrifft die vorliegende Erfindung eine elektrische Maschine mit einem solchen Hohlleiter. Schließlich betrifft die vorliegende Erfindung ein Verfahren zum Herstellen eines Hohlleiters für eine elektrische Maschine.

In einer elektrischen Maschine besteht das Problem, Wärme, welche in den stromführenden elektrischen Leitern durch ohmsche Verluste entsteht, möglichst effizient abzuführen. Zum Kühlen der elektrischen Maschine beziehungsweise der stromführenden Leiter sind aus dem Stand der Technik unterschiedliche Kühlvorrichtungen bekannt. Gewöhnlich werden stromführende elektrische Leiter in der elektrischen Maschine indirekt gekühlt. Beispielsweise können Kühlvorrichtungen, etwa Kupferrohre, die von einem geeigneten Kühlmedium durchflossen werden, im Blechpaket angeordnet sein. Hierbei wird der Wärmestrom aus den elektrischen Leitern, die in der Nut angeordnet sind, über die Nutisolation, von dort über die Zähne und danach über das Blechpaket hin zu der Kühlvorrichtung geleitet. In diesem Fall sind eine Reihe von Wärmestrombarrieren zu überwinden, die die Effizienz der Kühlung reduzieren. Aus dem Stand der Technik sind auch direkte Kühlverfahren bekannt, bei denen beispielsweise in die Nuten, in denen die stromführenden elektrischen Leiter liegen, mit einem geeigneten Kühlmedium geflutet und durchflossen werden. Hierzu ist die elektrische Maschine entsprechend ausgestaltet.

Das Interesse richtet sich vorliegend insbesondere auf elektrische Maschinen, die sogenannte Hohlleiter aufweisen. Derartige Hohlleiter sind üblicherweise aus einer Leitereinrichtung gebildet, die im Wesentlichen hohlzylinderförmig ausgebildet ist und die aus einem massiven Material, beispielsweise Kupfer, gebildet ist. Diese Hohlleiter können an der Außenfläche entsprechend elektrisch isoliert sein. Im Inneren des Hohlleiters ist ein Kühlkanal ausgebildet, der von einem Kühlmedium durchflossen wird. Somit ist es grundsätzlich möglich, dass ein geringer Wärmeübergangsüberstand zwischen dem stromführenden Leiter und dem Kühlmedium bereitgestellt werden kann. Als Kühlmedium wird in diesem Fall beispielsweise ein Transformatorenöl oder Isolieröl verwendet, welches elektrisch nicht leitfähig ist. Ein derartiges Transformatorenöl weist aber im Vergleich zu anderen Kühlmedien, beispielsweise Wasser, eine geringere Wärmeleitfähigkeit auf.

Wenn die Hohlleiter in den Nuten der elektrischen Maschine angeordnet sind, sind diese meist übereinander angeordnet. Die unterschiedlichen Positionen der Hohlleiter innerhalb der Nut führen im Betrieb der elektrischen Maschine zu Stromverdrängungseffekten, durch welche zusätzliche Verluste entstehen.

Es ist Aufgabe der vorliegenden Erfindung, eine Lösung aufzuzeigen, wie eine elektrische Maschine mit einem Hohlleiter effizienter betrieben werden kann.

Diese Aufgabe wird erfindungsgemäß durch einen Hohlleiter, durch eine elektrische Maschine sowie durch ein Verfahren gemäß den Merkmalen der jeweils unabhängigen Patentansprüche gelöst. Vorteilhafte Weiterbildungen der Erfindung sind Gegenstand der abhängigen Patentansprüche.

Ein erfindungsgemäßer Hohlleiter für eine elektrische Maschine umfasst eine Leitereinrichtung, welche aus einem elektrisch leitfähigen Material gebildet ist. Darüber hinaus umfasst der Hohlleiter einen Kühlkanal, welcher zum Kühlen der Leitereinrichtung mit einem Kühlmedium durchströmbar ist, dabei umgibt die Leitereinrichtung den Kühlkanal zumindest bereichsweise. Des Weiteren umfasst die Leitereinrichtung eine Mehrzahl von Einzelleitern, welche entlang einer Umfangsrichtung des Kühlkanals gleichmäßig beabstandet zueinander angeordnet sind. Darüber hinaus umfasst der Hohlleiter eine Trägereinrichtung, an welcher oder in welcher die Einzelleiter gehalten sind.

Der Hohlleiter kann als stromführender Leiter in einer elektrischen Maschine, insbesondere einer rotierenden elektrischen Maschine, verwendet werden. Beispielsweise kann die elektrische Maschine einen Stator aufweisen, der mehrere Nuten umfasst und der Hohlleiter kann zumindest in einige der Nuten eingelegt werden. Der Hohlleiter umfasst die Leitereinrichtung, welcher zum Führen des elektrischen Stroms dient. Die Leitereinrichtung ist aus einem elektrisch leitfähigen Material, insbesondere einem Metall, gebildet. Diese Leitereinrichtung umgibt den Kühlkanal zumindest bereichsweise. Insbesondere umgibt die Leitereinrichtung den Kühlkanal vollständig. Der Kühlkanal kann beispielsweise eine runde Querschnittsfläche aufweisen. Der Kühlkanal kann ferner mit einer entsprechenden Pumpe verbunden werden, mittels welcher ein Kühlmedium durch den Kühlkanal hindurch gefördert werden kann. Somit kann die Wärme, die im Betrieb der elektrischen Maschine infolge ohmscher Verluste entsteht, durch das Kühlmedium, dass durch den Kühlkanal strömt, abgeführt werden.

Erfindungsgemäß ist es nun vorgesehen, dass die Leitereinrichtung eine Mehrzahl von Einzelleitern umfasst. Diese Einzelleiter sind derart an oder innerhalb der Trägereinrichtung gehalten, dass diese entlang der Umfangsrichtung des Kühlkanals gleichmäßig beabstandet zueinander angeordnet sind. Im Vergleich zu bekannten, massiven Hohlleitern ergibt sich der Vorteil, dass der Hohlleiter flexibler ausgebildet ist und somit beispielsweise einfacher und Bauraum sparender in den Nuten angeordnet werden kann. Durch die Ausgestaltung der Leitereinrichtung, die eine Mehrzahl von Einzelleitern umfasst, kann zudem erreicht werden, dass Wärme, die sich in jedem der Einzelleiter ausbildet, besonders effektiv an das Kühlmedium abgeführt werden kann. Somit kann ein effizienter Betrieb der elektrischen Maschine ermöglicht werden.

Bevorzugt sind die Einzelleiter jeweils als Litze ausgebildet und weisen eine Mehrzahl von Drähten auf, welche in sich verdreht angeordnet sind. Die Drähte können aus einem Metall, insbesondere Kupfer oder Aluminium, gebildet sein. Die Drähte der Einzelleiter können zueinander elektrisch isoliert sein. Beispielsweise kann auf den jeweiligen Drähten eine entsprechender elektrischer isolierende Beschichtung aufgebracht sein. Dabei ist es insbesondere vorgesehen, dass die Drähte entlang der Haupterstreckungsrichtung der jeweiligen Leitereinrichtung in sich verdreht sind. Beispielsweise sind die Drähte so verflochten beziehungsweise zueinander angeordnet, dass jeder Draht möglichst jede Stelle im Gesamtquerschnitt des Einzelleiters gleich oft einnimmt. Die jeweiligen Einzelleiter können beispielsweise als Hochfrequenzlitze ausgebildet sein. Weiterhin kann es vorgesehen sein, dass die jeweiligen Einzelleiter als sogenannte Pressseile ausgebildet sind. Dabei sind die Drähte beispielsweise gemäß der Anordnung eines Roebelstabs zueinander angeordnet. Durch derartige ausgestaltete Einzelleiter können die Stromverdrängungseffekte effektiv reduziert werden.

In einer weiteren Ausführungsform sind die Einzelleiter jeweils entlang einer Schraubenlinie um den Kühlkanal herum angeordnet. Insbesondere sind alle der Einzelleiter entlang einer Schraubenlinie um den Kühlkanal herum angeordnet. Die Einzelleiter sind zudem entlang der Umfangsrichtung des Kühlkanals gleichmäßig beabstandet zueinander angeordnet. Wie bereits erläutert, weist der Kühlkanal bevorzugt eine runde Querschnittsfläche auf. Dabei kann die Schraubenlinie, die auch als Helix bezeichnet werden kann, so ausgebildet sein, dass jeder der Einzelleiter innerhalb einer vorbestimmten Länge des Hohlleiters jede Position im Gesamtquerschnitt des Hohlleiters gleich oft einnimmt. Diese vorbestimmte Länge kann an die Ausgestaltung der elektrischen Maschine, insbesondere des Blechpakets, angepasst sein. Durch diese Anordnung der Einzelleiter können Stromverdrängungseffekte im Betrieb der elektrischen Maschine vermindert werden und somit die Verluste im Betrieb der elektrischen Maschine reduziert werden. Zudem bilden die Einzelleiter eine Haltestruktur beziehungsweise Stützstruktur des Hohlleiters, durch welche die erforderliche mechanische Stabilität des Hohlleiters gewährleistet werden kann.

In einer weiteren Ausgestaltung weist der Hohlleiter eine rechteckige Querschnittsfläche auf. Da die Nuten der elektrischen Maschine üblicherweise ebenfalls eine rechteckige Querschnittsfläche aufweisen, kann der Hohlleiter auf einfache Weise innerhalb der Nut angeordnet werden. Dabei kann es auch vorgesehen sein, dass der Hohlleiter derart in den Nuten der elektrischen Maschine angeordnet wird, dass dieser mehrere Wicklungen ausbildet. Durch die rechteckige Querschnittsfläche können einzelne Abschnitte des Hohlleiters auf einfache weise nebeneinander und/oder übereinander in der Nut angeordnet werden.

In einer Ausführungsform sind die Einzelleiter jeweils vollständig von der Trägereinrichtung umgeben. Mit anderen Worten sind die Einzelleiter in die Trägereinrichtung eingebettet. Die Trägereinrichtung kann bevorzugt aus einem elektrisch isolierenden Material gefertigt sein. Wenn die Einzelleiter in die Trägereinrichtung eingebettet sind, sind die Einzelleiter von dem Kühlmedium durch die Trägereinrichtung elektrisch isoliert. Dies ermöglicht es, ein elektrisch leitfähiges Kühlmedium zu verwenden, das eine verhältnismäßig hohe Wärmeleitfähigkeit aufweist. Beispielsweise kann Wasser als Kühlmedium verwendet werden. Auf diese Weise kann die im Betrieb der elektrischen Maschine entstehende Wärme besonders effektiv von den Einzelleitern abführen kann.

In einer alternativen Ausführungsform weist die Trägereinrichtung eine Mehrzahl von zu den Einzelleitern korrespondierenden Ausnehmungen auf, welche jeweils in den Kühlkanal münden. Die jeweiligen Ausnehmungen können gleichmäßig verteilt entlang der Umfangsrichtung des Kühlkanals angeordnet sein. Die Einzelleiter können jeweils so in den korrespondierenden Ausnehmungen angeordnet sein, dass diese in den Ausnehmungen gehalten sind. Bei dieser Ausführungsform weisen die jeweiligen Einzelleiter einen direkten Kontakt zu dem Kühlmedium auf. In diesem Fall kann als Kühlmedium insbesondere ein Transformatorenöl oder ein anderes elektrisch isolierendes Kühlmedium verwendet werden. Durch den direkten Kontakt der Einzelleiter mit dem Kühlmedium kann die Wärme besonders effizient abgeführt werden.

Weiterhin ist es vorteilhaft, wenn die Trägereinrichtung aus zumindest einem ersten, elektrisch isolierenden Material, insbesondere einem Kunststoff, gebildet ist. Dadurch, dass die Trägereinrichtung aus einem elektrisch isolierenden Material gebildet ist, kann beispielsweise auf eine Nutisolation verzichtet werden, da die Einzelleiter gegenüber der Nut durch die Trägereinrichtung elektrisch isoliert sind. Damit kann eine einfache und kostengünstige Fertigung mit der elektrischen Maschine erreicht werden.

In einer weiteren Ausführungsform ist in das erste Material in einem den Einzelleitern zugeordneten Bereich ein zweites Material eingebracht, welches im Vergleich zum ersten Material eine höhere Wärmeleitfähigkeit aufweist. Das zweite Material kann elektrisch nicht oder nur sehr schlecht leitend ausgebildet sein. Das zweite Material kann beispielsweise ein wärmeleitfähiger Kunststoff sein, der aus einer Polymermatrix besteht, in die beispielsweise Metallpartikel oder Keramikpartikel eingebracht sind. Es kann auch vorgesehen sein, dass das zweite Material eine Keramik ist. Durch das zweite Material, das lokal in das erste Material eingebracht ist, kann die Wärmeleitung in Richtung des Kühlkanals verbessert werden.

Eine erfindungsgemäße elektrische Maschine umfasst zumindest einen erfindungsgemäßen Hohlleiter. Die elektrische Maschine weist einen Stator mit Nuten auf, in welche der zumindest eine Hohlleiter eingelegt ist. Die elektrische Maschine kann beispielsweise als Transversalflussmaschine ausgebildet sein. Es kann insbesondere vorgesehen sein, dass die elektrische Maschine für mobile Anwendungen im Straßenverkehr oder in der Luftfahrt verwendet wird. Beispielsweise kann die elektrische Maschine als Antriebsmotor für ein Fahrzeug verwendet werden. Dadurch, dass mit dem zumindest einen Hohlleiter die Wärme im Betrieb der elektrischen Maschine besonders effizient abgeführt werden kann, kann das Kühlsystem eines elektrischen Antriebsstrangs kleiner dimensioniert werden. Als Folge davon kann das Leistungsgewicht des Antriebsstrangs herabgesetzt werden.

Ein erfindungsgemäßes Verfahren dient zum Herstellen eines Hohlleiters für eine elektrische Maschine. Hierbei werden eine Leitereinrichtung, welche aus einem elektrisch leitfähigen Material gebildet ist, und ein Kühlkanal, welcher zum Kühlen der Leitereinrichtung mit einem Kühlmedium durchströmbar ist, derart ausgebildet, dass die Leitereinrichtung des Kühlkanals zumindest bereichsweise umgibt. Ferner wird zum Ausbilden der Leitereinrichtung eine Mehrzahl von Einzelleitern bereitgestellt, welche entlang einer Umfangsrichtung des Kühlkanals gleichmäßig beabstandet zueinander angeordnet werden. Zudem wird eine Trägereinrichtung bereitgestellt, an oder in welcher die Einzelleiter gehalten sind.

Die bereits erläutert, kann die Trägereinrichtung aus einem elektrisch isolierenden Material, insbesondere einem Kunststoff, gebildet sein. Die Trägereinrichtung kann hohlzylinderförmig beziehungsweise schlauchförmig ausgebildet sein. Zum Herstellen der Trägereinrichtung kann beispielsweise ein entsprechendes Extrusionsverfahren verwendet werden. In die Trägereinrichtung können dann die Einzeldrähte eingebracht werden. Dabei können die Einzeldrähte während des Extrusionsverfahren in die Trägereinrichtung eingebracht werden. Es kann auch vorgesehen sein, dass das erste Material, aus dem die Trägereinrichtung gebildet ist, bandförmig bereitgestellt wird. An oder in diesem bandförmigen Material können dann die Einzelleiter angeordnet werden. Dieses Band kann dann wendelförmig aufgewickelt werden und die Kanten können dann miteinander verbunden werden. Somit kann beispielsweise auf einfache Weise erreicht werden, dass die Einzelleiter jeweils entlang einer Schraubenlinie angeordnet sind.

Bei einer weiteren Ausführungsform wird die Trägereinrichtung mittels einer 3D-Druckverfahrens hergestellt. Somit können die Vorteile eines Rapid-Prototyping-Verfahrens beziehungsweise eines sogenannten Additive-Manufacturing-Verfahrens genutzt werden. Falls in die Trägereinrichtung zusätzlich das zweite Material mit der erhöhten Wärmeleitfähigkeit eingebracht ist, kann dieses ebenfalls mittels eines 3D-Druckverfahrens bereitgestellt werden. Grundsätzlich ist es auch denkbar, dass die Einzelleiter der Leitereinrichtung mittels eines 3D-Druckverfahrens hergestellt werden.

Die mit Bezug auf den erfindungsgemäßen Hohlleiter vorgestellten bevorzugten Ausführungsformen und deren Vorteile gelten entsprechend für die erfindungsgemäße elektrische Maschine sowie das erfindungsgemäße Verfahren.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert. Dabei zeigen:
- FIG 1: einen Hohlleiter gemäß dem Stand der Technik in einer geschnittenen Seitenansicht, wobei der Hohlleiter eine Leitereinrichtung und einen innerhalb der Leitereinrichtung angeordneten Kühlkanal aufweist;
- FIG 2: einen Hohlleiter gemäß einer Ausführungsform der vorliegenden Erfindung in einer geschnittenen Seitenansicht, wobei die Leitereinrichtung eine Mehrzahl von Einzelleitern umfasst, die in eine Trägereinrichtung eingebettet sind;
- FIG 3: einen Hohlleiter gemäß einer weiteren Ausführungsform in einer geschnittenen Seitenansicht, wobei der Hohlleiter einen rechteckigen Querschnitt aufweist;
- FIG 4: einen Hohlleiter gemäß einer weiteren Ausführungsform in einer geschnittenen Seitenansicht, wobei die Einzelleiter in entsprechenden Ausnehmungen der Trägereinrichtung angeordnet sind;
- FIG 5: einen Hohlleiter gemäß einer weiteren Ausführungsform in einer geschnittenen Seitenansicht, wobei die Trägereinrichtung ein zusätzliches Material mit einer erhöhten Wärmeleitfähigkeit umfasst; und
- FIG 6: eine elektrische Maschine, welche einen Hohlleiter umfasst in einer schematischen Darstellung.

In den Figuren werden gleiche und funktionsgleiche Elemente mit den gleichen Bezugszeichen versehen.

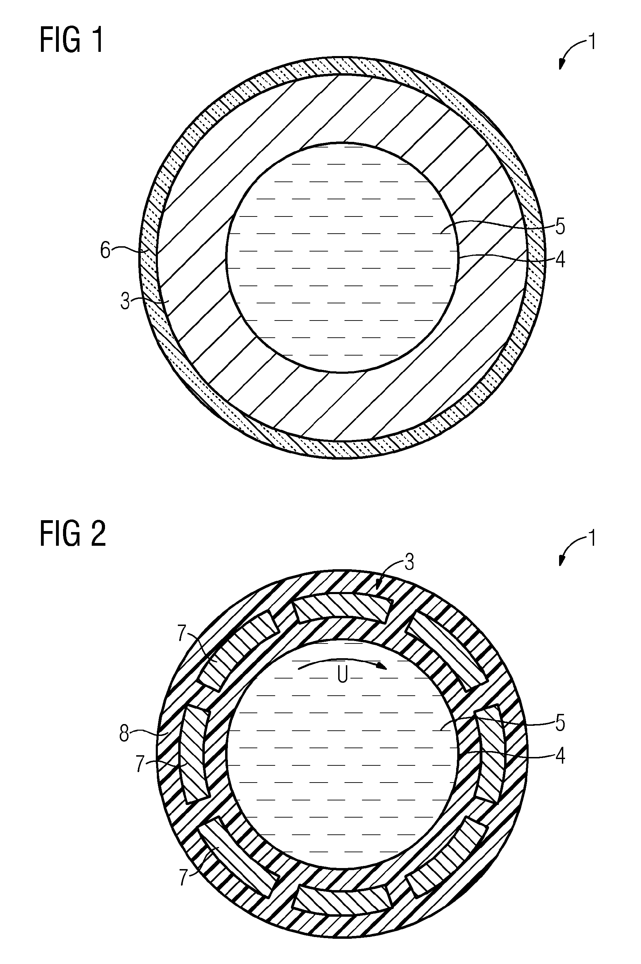

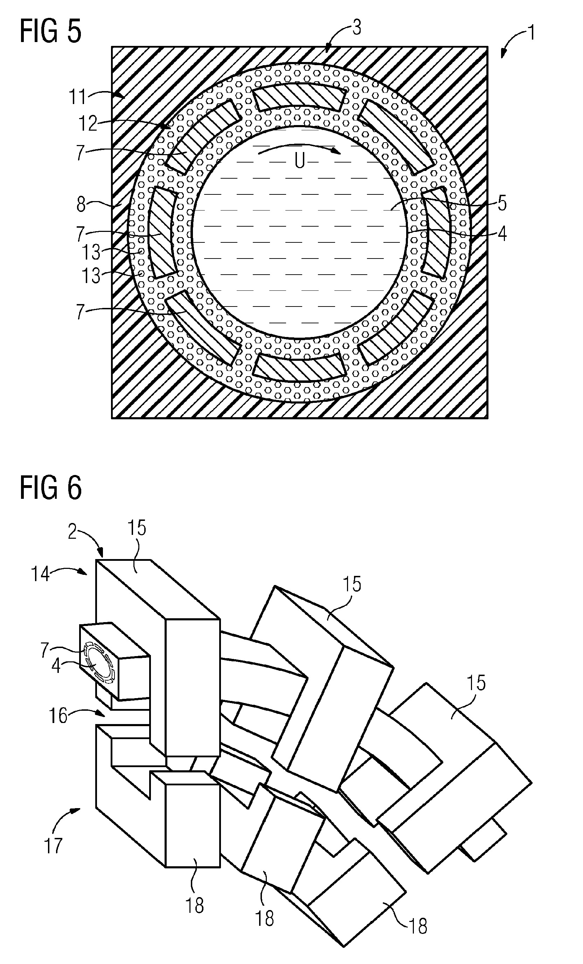

FIG 1 zeigt einen Hohlleiter 1 gemäß dem Stand der Technik in einer geschnittenen Seitenansicht. Der Hohlleiter 1 kann in einer elektrischen Maschine 2 eingesetzt werden (siehe FIG 6). Der Hohlleiter 1 umfasst eine Leitereinrichtung 3, die aus einem elektrisch leitfähigen Material, beispielsweise Kupfer, gebildet ist. Die Leitereinrichtung 3 dient zum Führen eines elektrischen Stroms im Betrieb der elektrischen Maschine 2.

Die Leitereinrichtung 3 ist im Wesentlichen hohlzylinderförmig ausgebildet. Zudem ist die Leitereinrichtung 3 vorliegend massiv ausgebildet. Innerhalb der Leitereinrichtung 3 ist ein Kühlkanal 4 angeordnet, der vorliegend eine runde Querschnittsfläche aufweist. In dem Kühlkanal 4 befindet sich ein Kühlmedium 5, beziehungsweise der Kühlkanal 4 ist von dem Kühlmedium 5 durchströmt. Bei dem Kühlmedium kann es sich beispielsweise um ein entsprechendes Transformatorenöl handeln. Somit kann im Betrieb der elektrischen Maschine 2 die entstehende Wärme abgeführt werden. Darüber hinaus umfasst der Hohlleiter 1 eine Isolierung 6, welcher an der Außenseite der Leitereinrichtung 3 angeordnet ist. Durch die Isolierung 6 können die einzelnen Abschnitte des Hohlleiters 1 zueinander isoliert werden, wenn diese in einer Nut 16 der elektrischen Maschine 2 angeordnet sind. Da die einzelnen Abschnitte des Hohlleiters 1 innerhalb der Nut 16 üblicherweise übereinander angeordnet sind, entstehen im Betrieb der elektrischen Maschine 2 üblicherweise Stromverdrängungseffekte.

FIG 2 zeigt einen Hohlleiter 1 gemäß einer Ausführungsform der vorliegenden Erfindung in einer geschnittenen Seitenansicht. Dabei umfasst die Leitereinrichtung 3 des Hohlleiters 1 eine Mehrzahl von Einzelleitern 7. Darüber hinaus umfasst der Hohlleiter 1 eine Trägereinrichtung 8, die dazu dient, die Einzelleiter 7 zu halten. In dem vorliegenden Ausführungsbeispiel sind die Einzelleiter 7 in die Trägereinrichtung 8 eingebettet. Darüber hinaus sind die Einzelleiter 7 entlang einer Umfangsrichtung U des Kühlkanals 4 gleichmäßig beabstandet zueinander angeordnet.

Die Trägereinrichtung 8 kann insbesondere aus einem elektrisch isolierenden Material, insbesondere einem Kunststoff, gebildet sein. Dadurch, dass die Einzelleiter 7 in die Trägereinrichtung 8 eingebettet und die Einzelleiter 7 beabstandet zueinander angeordnet sind, sind die Einzelleiter 7 zueinander durch die Trägereinrichtung 8 elektrisch isoliert. Darüber hinaus sind die Einzelleiter 7 elektrisch zu dem Kühlmedium 5 durch die Trägereinrichtung 8 isoliert. Dies ermöglicht es beispielsweise ein elektrisch leitfähiges Kühlmedium, insbesondere Wasser, mit einer hohen Wärmeleitfähigkeit zu verwenden. Zudem sind die Einzelleiter 7 durch die Trägereinrichtung 8 gegenüber der Nut 16 isoliert, wenn der Hohlleiter 1 innerhalb der Nut 16 angeordnet ist. Somit kann beispielsweise auf eine Nutisolation verzichtet werden.

Die jeweiligen Einzelleiter 7 weisen bevorzugt eine Mehrzahl von Drähten auf, welche zueinander elektrisch isoliert sind. Die Einzelleiter 7 können also als Litze, insbesondere als Hochfrequenzlitze, oder als sogenanntes Pressseil ausgebildet sein. Dabei können die jeweiligen Drähte innerhalb des Einzelleiters in sich verdreht sein. Die Einzelleiter 7 können nach Art eines Roebelstabs ausgebildet sein. Innerhalb des jeweiligen Einzelleiters 7 können die Drähte so zueinander angeordnet sein, dass jeder Draht jede Stelle im Gesamtquerschnitt des Einzelleiters 7 gleich oft einnimmt. Darüber hinaus kann es vorgesehen sein, dass die jeweiligen Einzelleiter 7 in eine Haupterstreckungsrichtung des Hohlleiters 1 entlang einer Schraubenlinie beziehungsweise einer Helix angeordnet sind. Dadurch, dass die Einzelleiter 7 in sich verdrehte Drähte aufweisen und/oder die Einzelleiter 7 entlang einer Schraubenlinie angeordnet sind, können Stromverdrängungseffekte reduziert werden.

Die jeweiligen Einzelleiter 7 sind in der Trägereinrichtung 8 derart angeordnet, dass durch die Einzelleiter 7 eine Haltestruktur beziehungsweise eine Stützstruktur für den Hohlleiter 1 gebildet wird. Durch die Einzelleiter 7 und deren Anordnung kann die mechanische Stabilität des Hohlleiters 1 gewährleistet werden. Somit kann beispielsweise verhindert werden, dass der Hohlleiter 1 geknickt wird und somit der Fluss des Kühlmediums 5 in dem Kühlkanal 4 unterbrochen wird. Insgesamt soll der Hohlleiter 1 aber so flexibel ausgebildet sein, dass er in die Nuten 16 der elektrischen Maschine 2 eingelegt werden kann.

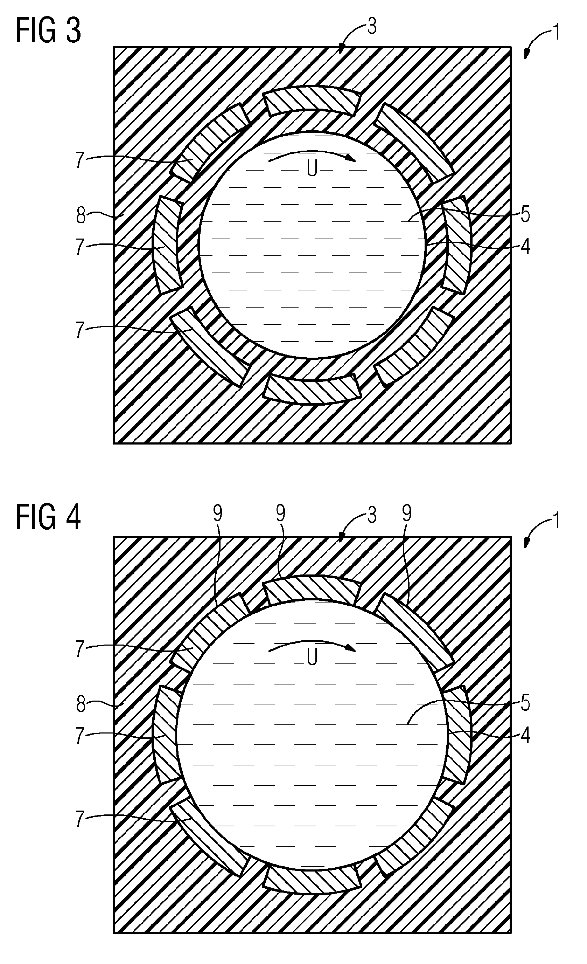

FIG 3 zeigt einen Hohlleiter 1 gemäß einer weiteren Ausführungsform der vorliegenden Erfindung in einer geschnittenen Seitenansicht. Hierbei weist die Trägereinrichtung 8 und somit der gesamte Hohlleiter 1 eine rechteckige Querschnittsfläche auf. Bei diesem Ausführungsbeispiel kann die Trägereinrichtung 8 beispielsweise mittels eines 3D-Druckverfahrens hergestellt sein. Die Trägereinrichtung 8 kann beispielsweise als 3D-Struktur mit einer entsprechenden 3D-Druckvorrichtung, die an die spezifische Anwendung angepasst ist, hergestellt werden. Die Leitereinrichtungen 7 können separat hergestellt werden. Dies erlaubt es, die Vorteile von Rapid-Prototyping-Verfahren zu nutzen. Zudem können die jeweiligen Abschnitte des Hohlleiters 1 einfach in eine Nut 16 eingelegt werden, da diese üblicherweise auch einen rechteckigen Querschnitt aufweist.

FIG 4 zeigt einen Hohlleiter 1 gemäß einer weiteren Ausführungsform in einer geschnittenen Seitenansicht. Bei dieser Ausführungsform weist die Trägereinrichtung 8 eine Mehrzahl von Ausnehmungen 9 auf, die entlang der Umfangsrichtung U des Kühlkanals 4 gleichmäßig beabstandet zueinander angeordnet sind. In diesen Ausnehmungen 9 sind die Einzelleiter 7 der Leitereinrichtung 3 gehalten. Beispielsweise können die Einzelleiter 7 in die korrespondierenden Ausnehmungen 9 eingepresst sein. Die geometrische Ausgestaltung der Ausnehmungen kann auch so gewählt sein, dass die Einzelleiter 7 kraftschlüssig und/oder formschlüssig in den korrespondierenden Ausnehmungen 9 gehalten werden. Die jeweiligen Ausnehmungen 9 münden dabei in den Kühlkanal 4. Dies hat zur Folge, dass die Einzelleiter 7 direkt mit dem Kühlmedium 5 in Kontakt sind. Die Einzelleiter 7 liegen also frei in dem Kühlkanal 4. In diesem Fall kann als Kühlmedium beispielsweise ein Transformatorenöl oder ein anderes elektrisch isolierendes Kühlmedium verwendet werden.

FIG 5 zeigt einen Hohlleiter 1 gemäß einer weiteren Ausführungsform der vorliegenden Erfindung in einer geschnittenen Seitenansicht. Der Aufbau des Hohlleiters 1 entspricht grundsätzlich dem Aufbau des Hohlleiters 1 gemäß FIG 3. Die Trägereinrichtung 8 ist aus einem ersten Material 11, beispielsweise einem Kunststoff, gebildet. In einem Bereich 10 der Trägereinrichtung 8, welche den Einzelleitern 7 zugeordnet ist, ist ein zweites Material 12 eingebracht. Dabei ist es vorgesehen, dass die Trägereinrichtung 8 aus einem ersten Material 11 und dem zweiten Material 12 gebildet ist. Das zweite Material 12 weist im Vergleich zum ersten Material 11 eine höhere Wärmeleitfähigkeit auf. Das zweite Material 12, das vorliegend als einzelne Partikel 13 aufweist, kann beispielsweise eine Keramik umfassen. Das zweite Material 12 kann auch aus einem Kunststoff gebildet sein, in das entsprechende Partikel aus Metall oder Keramik eingebracht sind.

FIG 6 zeigt eine vereinfachte Darstellung der elektrischen Maschine 2 in einer Perspektivansicht. Die elektrische Maschine 2 umfasst einen Stator 14, der eine Mehrzahl von Einzelblechen 15 umfasst. Die Einzelbleche 15 umfassen jeweils eine Nut 16. In diese Nut 16 ist der Hohlleiter 1 eingelegt. Die elektrische Maschine 2 ist vorliegend als Transversalflussmaschine ausgebildet. Darüber hinaus umfasst die elektrische Maschine 2 einen Rotor 17, der relativ zu dem Stator 14 drehbar ist. Auch der Rotor 17 umfasst eine Mehrzahl von Einzelblechen 18.

Der Kühlkanal 4 des Hohlleiters 1 kann fluidisch mit einer entsprechenden Pumpe verbunden sein, sodass das Kühlmedium durch den Kühlkanal 4 gefördert werden kann. Im Betrieb der elektrischen Maschine 2 kann die entstehende Wärme effektiv abgeführt werden.

## Patentansprüche

1. Hohleiter (1) für eine elektrische Maschine (2) mit einer Leitereinrichtung (3), welche aus einem elektrisch leitfähigen Material gebildet ist, und mit einem Kühlkanal (4), welcher zum Kühlen der Leitereinrichtung (3) mit einem Kühlmedium (5) durchströmbar ist, wobei die Leitereinrichtung (3) den Kühlkanal (4) zumindest bereichsweise umgibt,
**dadurch gekennzeichnet, dass**
die Leitereinrichtung (3) eine Mehrzahl von Einzelleitern (7) umfasst, welche entlang einer Umfangsrichtung (U) des Kühlkanals (4) gleichmäßig beabstandet zueinander angeordnet sind, und der Hohleiter (1) eine Trägereinrichtung (8) umfasst, an oder in welcher die Einzelleiter (7) gehalten sind.

2. Hohleiter (1) nach Anspruch 1, **dadurch gekennzeichnet, dass** die Einzelleiter (7) jeweils als Litze ausgebildet sind und eine Mehrzahl von Drähten aufweisen, welche in sich verdreht angeordnet sind.

3. Hohleiter (1) nach Anspruch 1 oder 2, **dadurch gekennzeichnet, dass** die Einzelleiter (7) jeweils entlang einer Schraubenlinie um den Kühlkanal (4) herum angeordnet sind.

4. Hohleiter (1) nach einem der vorhergehenden Ansprüche, **dadurch gekennzeichnet, dass** der Hohlleiter (1) eine rechteckige Querschnittsfläche aufweist.

5. Hohleiter (1) nach einem der vorhergehenden Ansprüche, **dadurch gekennzeichnet, dass** die Einzelleiter (7) jeweils vollständig von der Trägereinrichtung (8) umgeben sind.

6. Hohleiter (1) nach einem der Ansprüche 1 bis 4, **dadurch gekennzeichnet, dass** die Trägereinrichtung (8) einen Mehrzahl von zu den Einzelleitern (7) korrespondierenden Ausnehmungen (9) aufweist, welche jeweils in den Kühlkanal (4) münden.

7. Hohleiter (1) nach einem der vorhergehenden Ansprüche, **dadurch gekennzeichnet, dass** die Trägereinrichtung (8) aus zumindest einem ersten, elektrisch isolierenden Material (11), insbesondere einem Kunststoff, gebildet ist.

8. Hohleiter (1) nach Anspruch 7, **dadurch gekennzeichnet, dass** in das erste Material (11) in einem den Einzelleitern (7) zugeordneten Bereich (10) ein zweites Material (12) eingebracht ist, welches im Vergleich zum ersten Material (11) eine höhere Wärmeleitfähigkeit aufweist.

9. Elektrische Maschine (2) mit zumindest einem Hohleiter (1) nach einem der vorhergehenden Ansprüche, wobei die elektrische Maschine (2) einen Stator (14) mit Nuten (16) aufweist, in welche der zumindest eine Hohleiter (1) in die Nuten (16) eingelegt ist.

10. Verfahren zum Herstellen eines Hohlleiters (1) für eine elektrische Maschine (2), bei welchem eine Leitereinrichtung (3), welche aus einem elektrisch leitfähigen Material gebildet ist, und ein Kühlkanal (4), welcher zum Kühlen der Leitereinrichtung (3) mit einem Kühlmedium (5) durchströmbar ist, derart ausgebildet werden, dass die Leitereinrichtung (3) den Kühlkanal (4) zumindest bereichsweise umgibt, **dadurch gekennzeichnet, dass**
zum Ausbilden der Leitereinrichtung (3) eine Mehrzahl von Einzelleitern (7) bereitgestellt wird, welche entlang einer Umfangsrichtung (U) des Kühlkanals (4) gleichmäßig beabstandet zueinander angeordnet werden und eine Trägereinrichtung (8) bereitgestellt wird, an oder in welcher die Einzelleiter (7) gehalten sind.

11. Verfahren nach Anspruch 10, **dadurch gekennzeichnet, dass** die Trägereinrichtung (8) mittels eines 3D-Druckverfahrens hergestellt wird.
